# EUROPEAN PATENT APPLICATION

(11) **EP 2 648 038 A1**
(43) Date of publication of application: **09.10.2013**
(21) Application number: 13162190.6
(22) Date of filing: 03.04.2013
(51) Int. Cl.: G02F 1/17, G02F 1/167

(54) **Light control device**

(30) Priority: 03.04.2012 JP 2012084427
(71) Applicant: Hitachi Chemical Company, Ltd., Chiyoda-ku Tokyo 100-6606 (JP)
(72) Inventor: Kaneko, Hiroki, Tokyo, 100-8220 (JP); Mori, Shunsuke, Tokyo, 100-8220 (JP); Kusunoki, Toshiaki, Tokyo, 100-8220 (JP)
(74) Representative: MERH-IP Matias Erny Reichl Hoffmann

(57) **Abstract**

The purpose of the present invention is to provide a light control device having a fast light control of a transmitting state and a light shielding state and a retention of the transmitting state at a voltage non-applying state which are compatible with each other, and is to provide a driving method thereof.

The light control device comprises: a first substrate 11 and a second substrate 12, a first electrode 12 formed on said first substrate 11, a second electrode 14 formed on said second substrate 12, a suspension 17, and a driving circuit 100, wherein said suspension 17 comprises a light controlling particle and a dispersion medium, said light controlling particle 16 has an optical anisotropy and is electrostatically charged, an electric potential difference is arranged between said first electrode 13 and said second electrode 14, and said second electrode 14 is constituted of periodically aligned electrodes having a same electric potential.

## Description

### [Field of the Invention]

The present invention relates to a light control device.

### [Background of the Invention]

In respect to a light control device and a driving method thereof, the following Patent Literature 1 discloses a technique in which: an electrophoresis style is used as a light control means, a cell is constituted by sandwiching a dispersed system having dispersed fine particles between substrates at least one of which is transparent, the fine particles are transferred by an electric field, and light permeability or light reflecting properties in a vertical direction to a substrate of the cell are changed.

The following Patent Literature 2 discloses a technique in which: a suspended particle style is used as a light control means, the technique has a light control layer prepared by dispersing a light controlling suspension containing a light controlling particle dispersed at a flowable state in a dispersion medium into a resin matrix formed from a polymer medium, the light control layer is transparent, a voltage is a constant voltage selected from 30V to 100V, and a variance of a transmittance at a frequency of from 30 Hz to 1000 Hz is 10 or less.

### [Citation List]

### [Patent Literature]

[Patent Literature 1] JP 2008-209953 A
[Patent Literature 2] JP 2008-158042 A

### [Brief Summary of the Invention]

Patent Literature 1 discloses that an optical transmittance of the cell is modulated by transferring the fine particle to a horizontal direction of the substrate. However, in case a distance between electrodes is lengthened for obtaining a high transmittance, a response of a modulation operation is deteriorated.

Patent Literature 2 discloses that an optical transmittance is modulated by an alignment operation of particles. However, there was a problem that a transmitting state cannot be retained at a voltage non-applying state.

The features of the light control device of the present invention for solving the above problems are as follows.
The light control device comprises: a first substrate and a second substrate, a first electrode formed on said first substrate, a second electrode formed on said second substrate, a suspension, and a driving circuit, wherein said suspension comprises a light controlling particle and a dispersion medium, said light controlling particle has an optical anisotropy and is electrostatically charged, an electric potential difference is arranged between said first electrode and said second electrode, and said second electrode is constituted of periodically aligned electrodes having a same electric potential.
The present invention further provides:
[1] A light control device comprising:
   a first substrate and a second substrate,
   a first electrode formed on said first substrate,
   a second electrode formed on said second substrate,
   a suspension, and
   a driving circuit,
   wherein said first substrate, said first electrode, said suspension, said second electrode, and said second substrate are arranged in order from a side of said first substrate,
   said driving circuit supplies an electric potential difference between said first electrode and said second electrode,
   said suspension comprises a light controlling particle and a dispersion medium,
   said light controlling particle has an optical anisotropy and is electrostatically charged,
   said second electrode is constituted so as to periodically align plural electrodes, and
   each electrode constituting said second electrode has a same electric potential.
[2] The light control device according to [1],
   wherein said light controlling particle is rod-like,
   said light controlling particle has an aspect ratio of from 5 to 30, and
   said light controlling particle comprises any one kind of polyperiodide, a polymer, a carbon-based material, a metallic material or inorganic compound.
[3] The light control device according to [1] or [2],
   wherein each electrode constituting said second electrode has a same width of a minor axis direction.
[4] The light control device according to any one of [1]-[3],
   wherein said first electrode is a solid electrode.
[5] The light control device according to any one of [1]-[3],
   wherein said first electrode is constituted so as to periodically align plural electrodes, and
   each electrode constituting said first electrode has a same electric potential.
[6] The light control device according to [5],
   wherein a period of the plural electrodes aligned in said first electrode is equal to a period of the plural electrodes aligned in said second electrode,
   a major axis direction of the electrode constituting said first electrode is orthogonal to a major axis direction of the electrode constituting said second electrode.
[7] The light control device according to any one of [1]-[6],
   wherein said driving circuit supplies an alternating voltage and a direct-current voltage.
[8] The light control device according to any one of [1]-[7],
   wherein said light controlling particle is negatively electrostatically charged,
   said light controlling particle is unevenly distributed on said second electrode by enlarging an electric potential of said second electrode above an electric potential of said first electrode, and
   said light controlling particle unevenly distributed on said second electrode is dispersed in said suspension by enlarging an electric potential of said first electrode above an electric potential of said second electrode.
[9] The light control device according to any one of [1]-[8],
   wherein a resin matrix is arranged between said first substrate and said second substrate, and
   said suspension is arranged in the form of liquid drop in said resin matrix.
[10] The light control device according to any one of [1]-[9],
   wherein a partition wall is arranged between said first substrate and said second substrate, and
   said suspension is arranged so as to be subdivided by said partition wall.
[11] The light control device according to any one of [1]-[10],
   wherein said driving circuit has an internal power supply, and
   said internal power supply has an electric power which allow said light controlling particle to be unevenly distributed on said second electrode at least once.
[12] The light control device according to any one of [1]-[11],
   wherein said light control device has an electrode connecting portion which connects each electrode constituting said second electrode.

### [Advantageous Effects of Invention]

The present invention can provide a light control device having a fast light control of a transmitting state and a light shielding state and a retention of the transmitting state at a voltage non-applying state which are compatible with each other.
Other objects, features and advantages of the invention will become apparent from the following description of the embodiments of the invention taken in conjunction with the accompanying drawings.

### [Brief Description of Drawings]

Fig.1 is a schematic cross-sectional view showing a constitution of a light control device of one working embodiment and a light shielding state.
Fig.2 is a schematic diagram showing a constitution of a light control device of one working embodiment.
Fig.3 is a schematic diagram showing a constitution of a light control device of one working embodiment.
Fig.4 is a figure showing a result of an electric field simulation in a cross section direction of a light control device of one working embodiment.
Fig.5 is a schematic diagram showing a driving wave profile and a modulation state of a light control device of one working embodiment.
Fig.6 is a schematic cross-sectional view showing a controlled light transmitting state of a light control device of one working embodiment.
Fig.7 is a schematic cross-sectional view showing an unevenly distributed transmitting state of a light control device of one working embodiment.
Fig.8 is a schematic diagram showing a constitution of a light control device of one working embodiment.
Fig.9 is a schematic diagram showing a constitution of a light control device of one working embodiment.
Fig.10 is a schematic cross-sectional view showing a constitution of a light control device of one working embodiment.
Fig.11 is a schematic cross-sectional view showing a constitution of a light control device of one working embodiment.
Fig.12 is a schematic diagram showing a constitution of a light control device of one working embodiment and an electric power supply path in driving.

### [Detailed Description of the Invention]

Embodiments for carrying out the present invention are explained below by referring to drawings etc. The following Examples demonstrate the specific examples of the contents of the present invention, the present invention is not limited to these Examples, and various changes and modifications can be made by a person skilled in the art without a range of technical concepts described at the present specification. At all drawings for explaining Examples, an element having an identical function is represented by an identical reference sign, and a repeated explanation thereof is omitted.

### [Example 1]

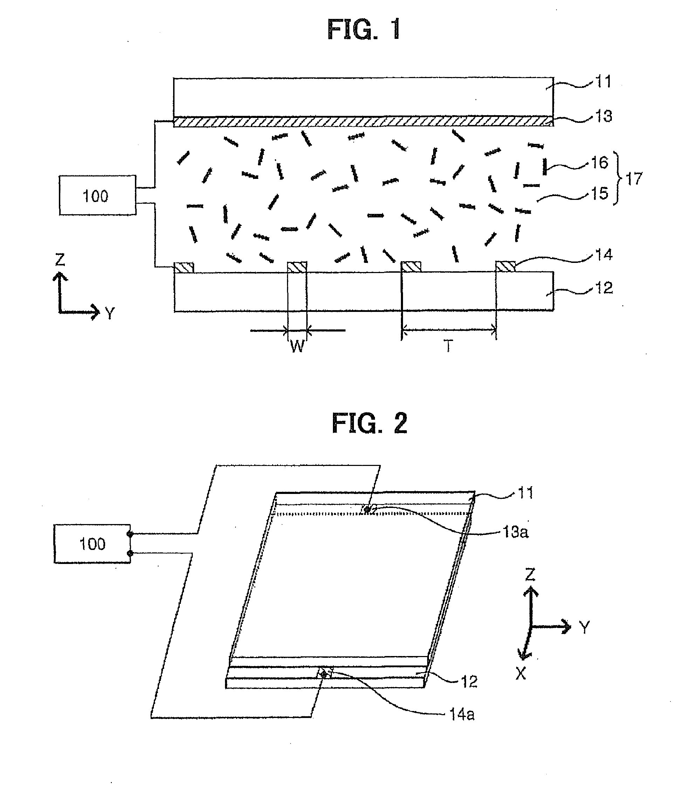

Fig.1, Fig.2 and Fig.3 are schematic diagrams of a light control device of one working embodiment. The first electrode 13 formed on the first substrate 11 and the second electrode 14 formed on the second substrate 12 are arranged at a specified space so as to face each other. The suspension 17 is filled into a suspension filling space formed by the space. The suspension 17 comprises a light controlling particle 16 dispersed in a dispersion medium (a dispersing agent) 15. In the present Example, as shown at Fig.2, the first substrate 11 and the second substrate 12 are superposed out of synch. The first electrode wiring connecting portion 13a and the second electrode wiring connecting portion 14a are connected to a driving circuit 100 via a wiring.

The light control device of the present Example can be produced by the following method. First, one set of glass substrates equipped with transparent electrodes formed composed of an indium tin oxide (ITO) is produced, and it comprises a first substrate 11, a first electrode 13, a second substrate 12, and a second electrode 14. Patterning of the first electrode 13 and the second electrode 14 are conducted by a photo lithography technique.

Next, the first electrode 13 and the second electrode 14 are faced, and a sealing agent containing spacer beads etc. is coated onto opposite sides of end parts of both substrates to adhere the both substrates (not shown at Figs.). Thereby, the suspension filling space of the suspension 17 having a distance of 25 µm between the both substrates is formed. Into the suspension filling space, the suspension 17 is filled due to a capillary phenomenon from end parts of the both substrates not adhered with a sealing agent.

The suspension 17 is constituted of a dispersion medium 15 comprising an acrylic acid ester oligomer and a light controlling particle 16 comprising polyperiodide. The light controlling particle 16 has an anisotropy in the shape, and exhibits an optical anisotropy different on an absorbance due to an alignment direction, and has a shape having an aspect ratio which is not 1, and is negatively electrostatically charged. A concentration of the light controlling particle 16 in the suspension 17 is 3.7 wt%. After filling the suspension 17, end parts of the both substrates not adhered are adhered and sealed with a sealing agent. The first electrode 13 and the second electrode 14 are wiring-connected with a driving circuit 100 to produce the light control device of the present Example.

The first electrode 13 of the light control device in the present Example is a solid electrode, and the second electrode 14 is constituted so as to periodically align plural electrodes in the stripe form, and these are connected with a second electrode wiring connecting portion 14a via a second electrode assembly portion 14b, and each electrode constituting the second electrode 14 has a same electric potential which does not depend upon an applied voltage. In the present Example, one set of the wiring connecting portions (13a, 14a) and the driving circuit 100 is shown, but plural sets of the wiring connecting portions and the driving circuit 100 can be provided in case of producing a light control element having a large area.

In respect to the phrase "has a same electric potential" as mentioned above, an expression "same electric potential" is conveniently used. However, it means an inclusion of not only the case that each electrode constituting the second electrode 14 has a completely same electric potential, but also the case that an electric potential difference is within a prescribed range. For example, an electric potential difference can be within a range of 5% or less of a maximum driving voltage of the driving circuit 100, more preferably within a range of 1% or less of the maximum driving voltage. When the each electrode has a same electric potential, it is at a state of a visually uniform transmittance distribution in a partially different electric potential of the second electrode at a light shielding state, a transmitting state or an intermediate state thereof.

In the present Example, a width W of a minor axis direction (Y direction in the Figs.) of each electrode constituting the second electrode 14 is equally 10 µm. A period T of a minor axis direction is constantly 35 µm.

In respect to the term "equally" as mentioned above, an expression "a width of a minor axis direction (Y direction in the Figs.) of each electrode is equally" is conveniently used. However, it means an inclusion of not only the case that a difference of a width of a minor axis direction of each electrode is completely equal, but also the case that a difference of a width of a minor axis direction of each electrode is within a prescribed range. For example, a difference of a width of a minor axis direction of each electrode can be within a range of 10% or less of a size of a width per se of a minor axis direction of each electrode, more preferably within a range of 5% or less. When the difference of a width of a minor axis direction of each electrode is equal, it is at a state of a visually uniform transmittance distribution in the driving.

In the meantime, same applies to a period also. The phrase "period is constant" means an inclusion of not only the case of a completely constant period but also the case that the period is within a prescribed range. For example, the period of each electrode can be within a range of 10% or less of a period of a certain electrode, more preferably within a range of 5% or less. When the electrodes are periodically aligned, it is at a state of a visually uniform transmittance distribution in the driving.

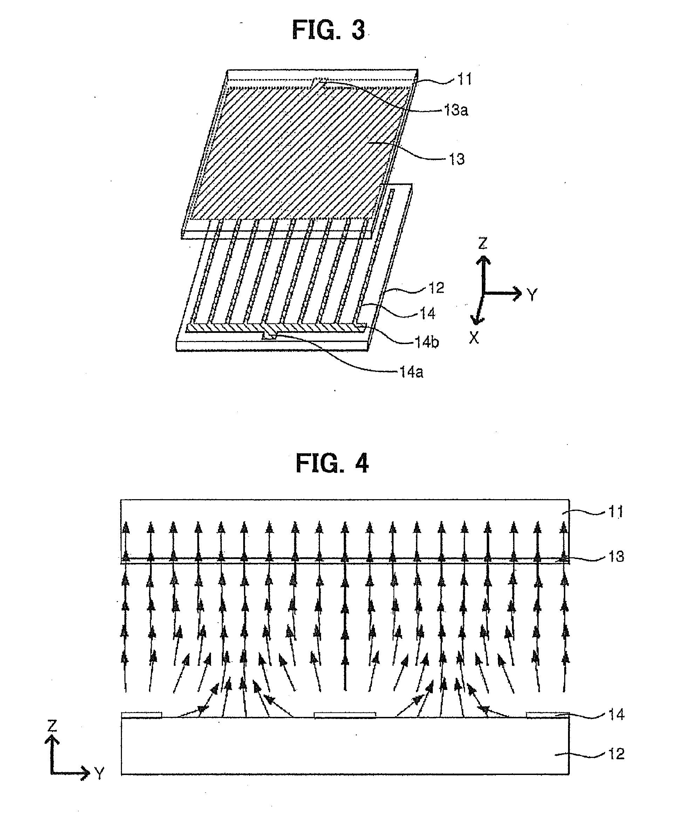

Fig.4 shows a result of an electric field simulation in a cross section of a light control device of one working embodiment. The case is that: a distance between substrates is 25 µm, the first electrode 13 is a solid electrode, the second electrode 14 is in the stripe form, a width of a minor axis is 10 µm, and a period is 35 µm. An arrow in Fig. 4 shows a direction of an electric field (a direction of an electric line of force in a start point of the arrow), and it is almost a vertical direction (Z direction in Fig.) toward a whole first electrode 13 in the solid form from the second electrode 14 in the stripe form. Additionally, an electric field is generated in a Z direction between the second electrode 14 and the second electrode 14 in the stripe form, i.e. also at a portion in the absence of the second electrode 14. The electric field has a crosswise direction component at vicinity of the second electrode 14. Due to the presence of this crosswise direction component, the light controlling particle 16 is likely to gather not only in a longitudinal direction but also in a horizontal direction.

The present simulation shows about one period of the second electrode 14 in the stripe form, but it is clear that an electric field distribution results in the same when an electrode width and a period are constant and an electric potential applied is same. A uniform in-plane transmittance is secured in the light control because the light controlling particle 16 similarly behaves every period by making the electrode width and the period constant.

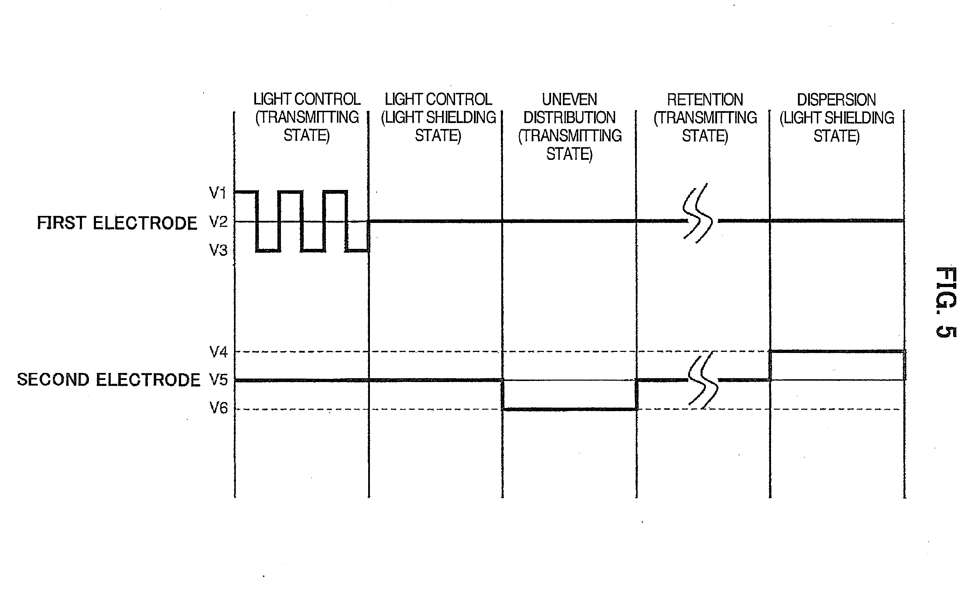

Fig.5 shows a driving wave profile and a modulation state of the light control device of the present Example. The light control device of the present Example can show a light control (a transmitting state), a light control (a light shielding state), an uneven distribution (a transmitting state), a retention (a transmitting state) and a dispersion (a light shielding state), which are changed, by providing an electric potential, as show at Fig.5, between the first electrode 13 and the second electrode 14 by the driving circuit 100.

V1, V2 and V3 represent a voltage, and there is a relationship of V1>V2>V3. Also V4, V5 and V6 represent a voltage, and there is a relationship of V4>V5>V6.

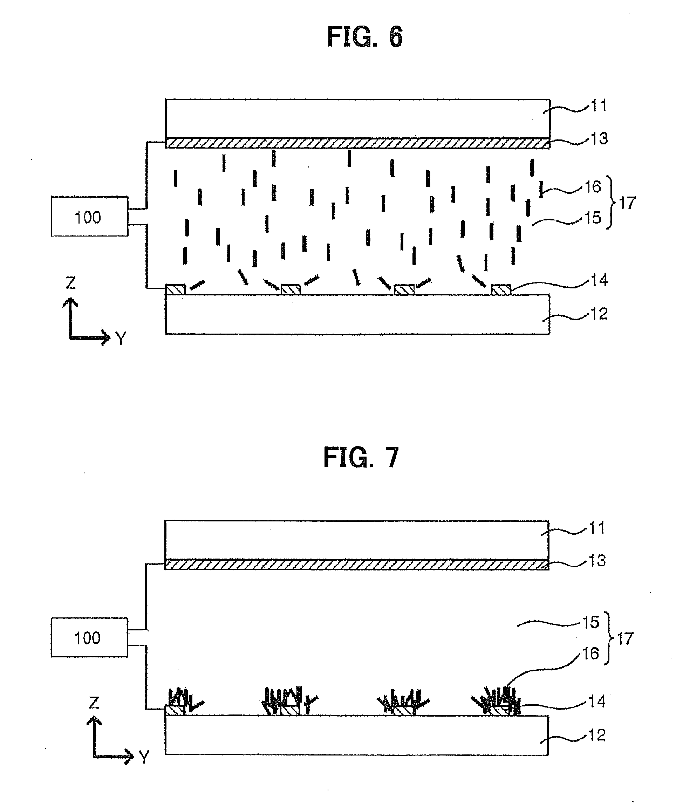

First, the light controlling particle 16 is subjected to a light control at a transmitting state (Fig.6) so as to align in almost a vertical direction to the substrate, by applying an alternating voltage to the first electrode 13. Additionally, a state between a random state and a vertical state can be present by changing an applied voltage, and thus any transmitting states can be obtained. In this light control (transmitting state), a voltage of the first electrode 13 is changed within a range of from V1 to V3, and a voltage of the second electrode 14 is constantly V5.

When an application of a voltage is stopped, it becomes a light shielding state (Fig.1). In this light control (a light shielding state), a voltage of the first electrode is constantly V2, and a voltage of the second electrode 14 is constantly V5.

By applying a direct-current voltage between the first electrode 13 and the second electrode 14 from the driving circuit 100, the electrostatically charged light controlling particle 16 moves to a direction opposite to an arrow of Fig.4, and is unevenly distributed on the second electrode 14 in the stripe form to become a transmitting state (Fig.7). In this uneven distribution (transmitting state), a voltage of the first electrode 13 is constantly V2, and a voltage of the second electrode 14 is constantly V6.

Also when the voltage is changed to a non-applying, this state is retained by a reflected image effect of the electrode with the electrostatically charged particle or an intermolecular force between the electrostatically charged particles or between the electrostatically charged particle and the electrode (Fig.7). In this retention (transmitting state), the voltage of the first electrode 13 is constantly V2, and the voltage of the second electrode 14 is constantly V5.

Additionally, by applying a direct-current voltage between the first electrode 13 and the second electrode 14 from the driving circuit 100 in a direction opposite to that of the above-mentioned uneven distribution, the electrostatically charged light controlling particle 16 moves to a direction of an arrow in Fig.4, and is dispersed from the second electrode 14 in the stripe form to return to an initial state (Fig.1). In this dispersion (light shielding state), the voltage of the first electrode 13 is constantly V2, and the voltage of the second electrode 14 is constantly V4.

As mentioned above, in the light control device of the present Example, by applying alternating voltage to the two electrodes, a transmittance can be fast modulated by an alignment of the rod-like light controlling particle without transferring the particle; and by applying a direct-current voltage to the two electrodes, a transmitting state due to the uneven distribution of the particle can be made and this state can be retained also at a voltage non-applying state.

Additionally, by using a second electrode 14 in the stripe form but not the solid form, an area of the electrode to be used can be decreased, and thus there is a resource saving effect. Especially, a rare material such as indium used for ITO etc. has a large price variance, and thus it is desired to decrease an amount of those used.

Additionally, by using a second electrode 14 in the stripe form but not the solid form, there is an effect that a stress generated between the electrode and the substrate due to a temperature variance of the light control device is relaxed and a generation of a defect due to e.g. a peeling between the electrode and the substrate is decreased.

In the light control device of the present Example, the following members other than the above-mentioned members can be suitably used.

The first substrate 11 and the second substrate 12 are substrates which transmit at least a partial wavelength of a visible light, and a transparent inorganic substrate such as several kinds of glasses and quartz and a resin substrate such as polyethylene terephthalate (PET), polycarbonate (PC) and cycloolefin polymer (COP) can be used. According to an application, a colored substrate and a substrate having a scattering property can be used. Additionally, a light control device, which can be light-modulated at a reflecting state and a light shielding state, can be also formed by using a substrate which is equipped with a layer reflecting or a substrate reflecting a visible light on one of the first substrate 11 and the second substrate 12.

The first electrode 13 and the second electrode 14 are electrodes which are formed on the above-mentioned first substrate 11 and second substrate 12; and indium tin oxide (ITO), indium zinc oxide (IZO), tin oxide, zinc oxide, carbon nanotube or graphene etc., which transmit at least a partial wavelength of a visible light, can be used. In the present Example, the transparent electrode in the solid form or in the stripe form is formed on a whole supporting base material, but without limiting thereto it can be arranged in the form of figure such as a circle or in a character style. Additionally, also when a wiring per se does not transmit a visible light, it can be also used by lessening a light shielding coefficient due to the wiring by narrowing a wiring width thereof and arranging in the stripe form.

The spacer beads used can include a glass or a polymer etc., and it is desired to be stable to an adhesive agent. In the meantime, it is preferred that the suspension filling space and the distance between the both substrates have from 4 µm to 150 µm from the viewpoint of a transmittance or a driving voltage. The spacer beads can be sprayed between the first substrate 11 and the second substrate 12 to maintain the suspension filling space. When the spacer beads are sprayed between the first substrate 11 and the second substrate 12, it is preferred that a refractive index of the spacer beads is close to a refractive index of the dispersion medium 15.

The suspension 17 comprises the below-mentioned light controlling particle 16 dispersed into the dispersion medium 15, and is filled into the suspension filling space of the second substrate 12 and the first substrate 11. The suspension 17 is filled due to a capillary phenomenon in the present Example, but the suspension 17 can be coated by a bar coating method or a drop inject method under vacuum (ODF) before adhering the first substrate 11 and the second substrate 12, and then the first substrate 11 and the second substrate 12 can be laminated to adhere and seal them.

The light controlling particle 16 is e.g. polyperiodide, has an anisotropy in the shape, exhibits an optical anisotropy different on an absorbance due to an alignment direction, and has a shape of an aspect ratio which is not 1. At the step of synthesizing the light controlling particle 16, nitrocellulose etc. can be added for increasing a uniformity of a particle size. Additionally, at a frequency of an alternating voltage to be applied for driving a light control means in a suspended particle style or at a frequency less than the frequency, it is desired that the light controlling particle 16 generates a dipole polarization. In that case, a dielectric material having a low electroconductivity is preferably used as the light controlling particle 16. The dielectric material having a low electroconductivity used can include a polymer particle and a particle coated with a polymer etc. As a shape of the light controlling particle 16, a rod-like or a plate form can be thought of. For example, when a rod-like light controlling particle 16 is used, an increase of a haze in the transmission or a resistance of a particle rotational motion to an electric field can be restricted. An aspect ratio of a major axis and a minor axis of the light controlling particle 16 at this time is preferably e.g. from 5 to 30. When the aspect ratio is 5 or more, an optical anisotropy due to the shape of the light controlling particle 16 can be exhibited. The size of the light controlling particle 16 is preferably from 1 µm or less, more preferably from 0.1 µm to 1 µm, further preferably from 0.1 µm to 0.5 µm. When the size of the light controlling particle exceed 1 µm, there can be generated a problem that a transparency is lowered by generating a light scattering or by lowering an alignment motion in the dispersion medium 15 in case of applying an electric field. In the meantime, the size of the light controlling particle 16 is measured by an electronic microscope observation etc. A quality of material of the light controlling particle 16 can be a carbon-based material such as carbon black, a metallic material such as copper, nickel, iron, cobalt, chromium, titanium and aluminum, and an inorganic compound such as silicon nitride, titanium nitride and aluminum oxide. Additionally, it can be a particle in which a polymer is coated on these materials. The light controlling particle 16 can include only one kind of the above materials or two or more kinds of the above materials.

The dispersion medium 15 can be a liquid copolymer comprising an acrylic acid ester oligomer. Also polysiloxane (silicone oil) etc. can be used. In the meantime, it is preferred that it has a viscosity at which the light controlling particle 16 is floatable and operatable, has a high resistance, does not have an affinity to the first substrate 11, the second substrate 12, the first electrode 13, and the second electrode 14, has a refractive index close to those, and is a liquid copolymer having an dielectric constant different from that of the light controlling particle 16. Specifically, it is desired that a resistivity of the dispersion medium 15 is from 10¹² Ωm to 10¹⁵ Ωm at a temperature of 298K. When there is a dielectric constant difference between the dispersion medium 15 and the light controlling particle 16, it can act as a driving force under an alternating current electric field in the alignment operation of the light controlling particle 16. In the present Example, a specific dielectric constant of the dispersion medium 15 is from 3.5 to 5.0.

### [Example 2]

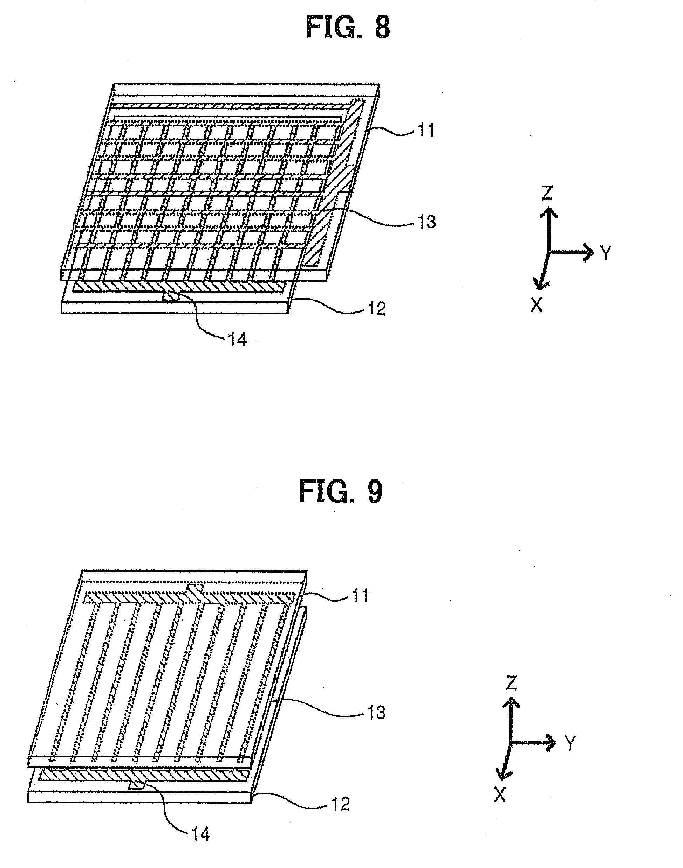

Fig.8 and Fig.9 are schematic diagrams showing a light control device of one working embodiment, as well as in the above-mentioned Example except that the first electrode 13 is formed of an electrode in the stripe form. At Fig.8, it is arranged so as to have a same electrode width and a same period as the second electrode 14 and the first electrode 13 in the stripe form and to be orthogonal to them each other.

At Fig.9, it is arranged so as to have a same electrode width and a same period as the second electrode 14 and the first electrode 13 in the stripe form and to be parallel to them each other and to overlap the respective electrodes of the second electrode 14 and the first electrode 13 in the stripe form.

By thus forming the first electrode 13 and the second electrode 14, an in-plane uniformity of a light control (transmitting state) is somewhat inferior, but similar effects to those of the above Example are obtained except for it. Additionally, in the present Example, an area of an electrode to be used can be decreased by using the first electrode in the stripe form but not the solid form, and thus an effect of a resource saving is obtained and an amount of a rare material used such as a rare metal can be suitably decreased especially when ITO etc. is used.

Additionally, a certain degree of transparent property can be secured also when a non-transparent material such as metal is used as both or one of the first electrode 13 and the second electrode 14.

The present Example shows the cases in which it is arranged so that an electrode width and a period of the first electrode 13 be same as those of the second electrode 14 and these become orthogonal or parallel to them each other. However, also in case of other electrode width, period and arrangement, those can be used as a light control device according to a degree of an in-plane uniformity of a light control (transmitting state).

### [Example 3]

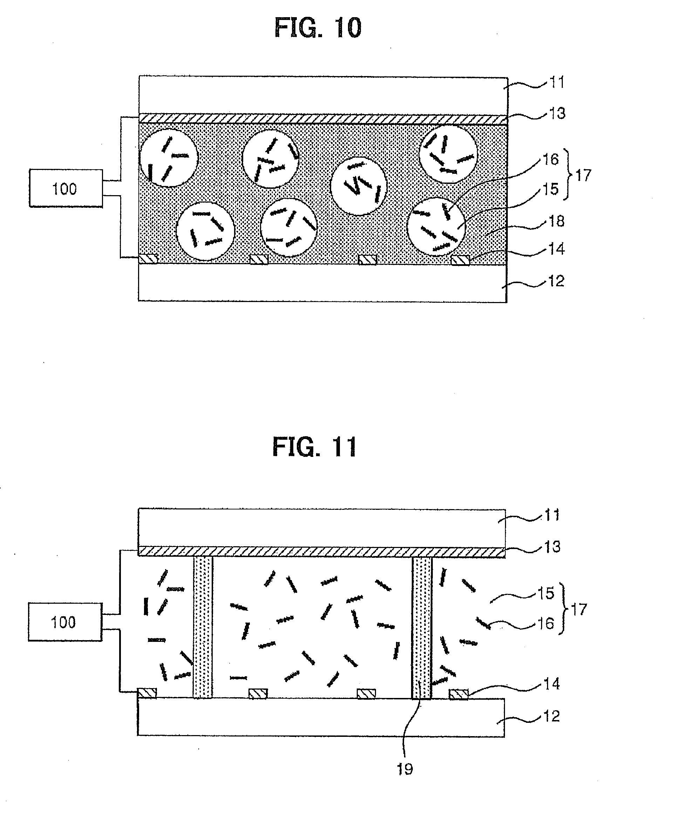

Fig.10 is a schematic diagram of a light control device of one working embodiment, which is similar to the above-mentioned Example except that a resin matrix 18 is arranged between the first substrate 11 and the second substrate 12, and the suspension 17 is surrounded by the resin matrix 18 to be in the form of liquid drop. At this point, a size of a capsule is usually from 0.5 µm to a space between the first substrate and the second substrate.

In addition to the effects of the above-mentioned Example, the present Example is suitable in the use of a flexible film such as a resin substrate as the first substrate 11 and the second substrate 12 because the suspension 17 is retained by the resin matrix 18. The second electrode 14 and in some cases the first electrode 13 also have an electrode in the stripe form, and thus there is an effect that a stress generated at the inflection of the substrate is relaxed and a generation of a defect due to e.g. a peeling between the electrode and the substrate is decreased. Additionally, the suspension is retained by the resin matrix, and thus even when the substrate is cut at any positions, a liquid leakage of the suspension is not generated and each of the cut ones can be used as a light controlling element. On this occasion, electrode takeoff connections are arranged in a plural or whole end part so that the takeoff connections are necessarily arranged at respective cut portions (not show at Figures.).

A member and a production process, which are particularly relevant to the light control device of the present Example, are explained as follows.

The resin matrix 18 can be a polymer, which can be cured by a heating or an exposure to light, and retains the first substrate 11 and the second substrate 12 and the suspension 17 in a film formation, and insulates between the first electrode 13 and the second electrode 14. A curable polymer medium used can include e.g. a liquid polymer composition containing a polymer compound silicone resin and a polymerization initiator. The silicone resin is synthesized e.g. by subjecting a both terminal silanol siloxane polymer such as a both terminal silanol polydimethyl siloxane, a both terminal silanol polydiphenyl siloxane-dimethyl siloxane copolymer and a both terminal silanol polydimethyl diphenyl siloxane, trialkyl alkoxy silane such as trimethyl ethoxy silane, or an ethylenic unsaturated bond-containing silane compound such as (3-acryloxypropyl)methyl dimethoxy silane to a dehydrogenation condensation reaction and a dealcoholization reaction in the present of an organic tin type catalyst such as 2-ethyl hexane tin. A silicone resin in the form of solventless type is preferably used. That is, when a solvent is used in synthesizing the silicone resin, the solvent is preferably removed after the synthesis reaction.

A refractive index of the resin matrix 18 is preferably close to a refractive index of the dispersion medium 15. Specifically, it is desired that a difference between a refractive index of the resin matrix 18 and a refractive index of the dispersion medium 15 is 0.002 or less. Thereby, a scattering of the dispersion medium 15 and the resin matrix 18 can be restricted.

The dispersion medium 15 used is preferably a liquid copolymer having no affinity to the resin matrix 18 and no electroconductivity. Specifically, it is preferably a (meth)acrylic acid ester oligomer having a fluoro group and/or a hydroxyl group, more preferably a (meth)acrylic acid ester oligomer having a fluoro group and a hydroxyl group. By using such a copolymer, one of monomer units of a fluoro group and a hydroxyl group is directed to the light controlling particle 16, a remaining monomer unit works for stably maintaining the suspension 17 in the resin matrix 18, and thus the light controlling particle 16 is very uniformly dispersed in the suspension 17, and the light controlling particle 16 is derived into the suspension 17 to be phase separated in the phase separation.

The resin matrix containing the suspension is formed as follows. First, the suspension 17 is mixed with a polymer to produce a mixed liquid containing the suspension 17 dispersed at a liquid drop state in a polymer compound. This mixed liquid is coated at a constant thickness on an electrode of one substrate of the first substrate 11 or the second substrate 12, and a solvent contained in the mixed liquid is drying-removed according to need. Then, the other substrate is closely laminated to the one substrate so that an electrode of the other substrate be in contact with the mixed liquid coated.

In the coating, it can be diluted with a suitable solvent according to need. When the solvent is used, it is necessary to be dried after coating on the first substrate 11 or the second substrate 12. The solvent used can include tetrahydrofuran, toluene, heptane, cyclohexane, ethyl acetate, ethanol, methanol, isoamyl acetate, and hexyl acetate etc. In order to form a light control film in which the suspension 17 in the liquid form is dispersed at a fine liquid drop mode in the resin matrix 18, a method for mixing the light control material of the present Example by a homogenizer or an ultrasonic homogenizer etc. to finely disperse the suspension 17 in the resin matrix 18, a phase separation method by a polymerization of a silicone resin component in the resin matrix 18, a phase separation method by a solvent volatilization, or a phase separation method by a temperature etc. can be used.

### [Example 4]

Fig.11 is a schematic diagram of a light control device of one working embodiment, which is similar to the above-mentioned Example except that a partition wall 19 is arranged between the first substrate 11 and the second substrate 12 and the suspension 17 is subdivided by the partition wall 19.

In the present Example, in addition to the effects of the above-mentioned Example, a light control device having a more in-plane uniformity can be produced as compared to especially Example 3, because the suspension 17, which was subdivided in the form of liquid drop by the resin matrix 18 in Example 3, is subdivided by arranging the periodical partition wall 19. Especially, there is an effect that a light control operation of each partition wall 19 can be same to obtain a uniformity of an in-plane transmittance by setting up a period of the partition wall 19 to an integral multiple of period of the second electrode 14 in the stripe form.

It is preferred that the partition wall 19 is a transparent insulating dielectric material comprising a glass or a polymer, is stable to other constitutional material, and has a refractive index close to that of the dispersion medium 15. A material similar to that of the above-mentioned resin matrix 18 can be used. In the meantime, in order to lower a transmittance at a light shielding state, at least a top portion of the partition wall 19 can be colored black or can be colored other color for a chromaticity correction. Additionally, in order to widely secure an operation area of each light control, a width of the partition wall 19 is preferably thin.

### [Example 5]

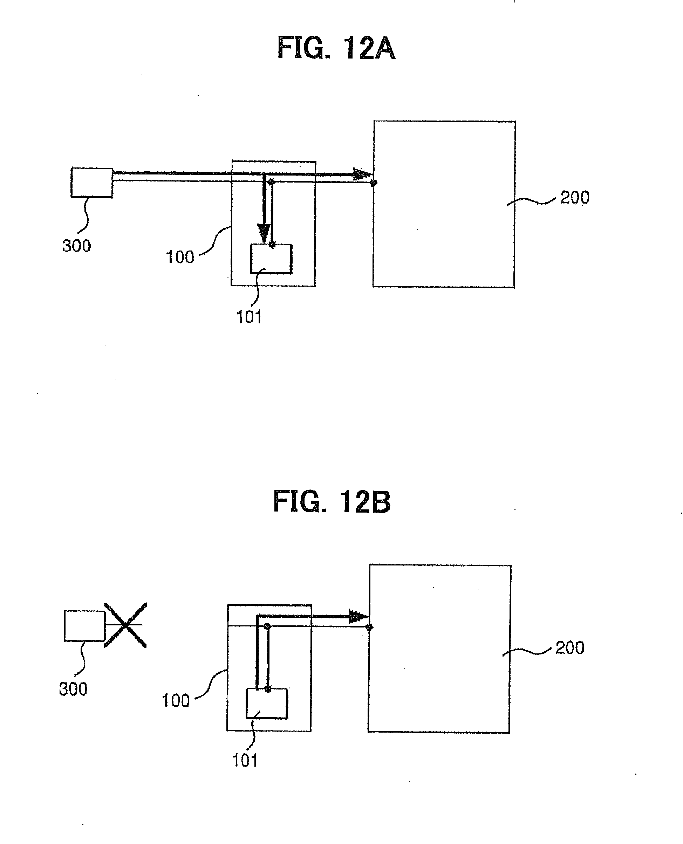

Fig.12 is a schematic diagram of a light control device of one working embodiment, which is similar to the above-mentioned Example except that the driving circuit 100 has an internal power supply 101 and a control circuit (not shown at Figures). The light control device of the present Example drives a display area 200 of the light control device by supplying an electric power from an external power supply 300 and by changing an alternating current, an direct current or an electric potential so as to conform to a light control operation in the driving circuit 100 as shown at Fig.12A. An arrow represents a feeding path of an electric power at the Fig. Additionally, the internal power supply 101 simultaneously receives an electric power supply from the external power supply, and stores an electric power which at least once generates the uneven distribution (transmitting state) in the second electrode 14 in the stripe form shown at the above-mentioned Example. At this moment, the external power supply means an electric power supply source, which usually mainly supplies an electric power to the driving circuit 100, such as a power generator, a capacitor and several kinds of batteries, or an electric power supply source from an electric power system. As shown at Fig.12B, when an electric power from the external power supply is stopped, a control circuit (not shown at Figure) within the driving circuit 100 works, and a supply of an electric power is received from the internal power supply 101 to be driven so as to generate an uneven distribution (transmitting state) in the second electrode 14 in the stripe form and to be at a retention state.

In addition to the effects of the above-mentioned Example, the present Example is effective when an electric power from an external power supply is stopped due to especially a power outage, an accident or a trouble etc., when it is used as a window for a means of transportation such as especially an aircraft, a railroad vehicle, a marine vessel, and a motor car which have an effect of avoiding that a light control state is unintentionally changed to a light shielding state, or especially when it is used as a window for an architectural structure of an public institution.

Thus, the light control device explained by each Example as above can be suitably used for e.g. an indoor or outdoor barrier (partition), a window glass or a roof skylight for an architectural structure, several kinds of plane display elements used in an electronic industry or an imaging apparatus, several kinds of instrument boards and a replacement of an existing liquid crystal display element, a light shutter, several kinds of indoor or outdoor advertisements and guide sign boards, a window glass for an aircraft, a railroad vehicle or a marine vessel, a window glass, a back miller or a sunshine roof for a motor car, eyeglasses, sunglasses, a sun visor, or an image pickup element. As an application method, the light control device of the present Example can be directly used. Additionally, according to a use application, for example the light control device can be used by sandwiching it between two base materials or can be used by attaching it on one surface of a base material. The base material used can include for example a glass or a polymer film etc. Especially, when it is used as a window for partitioning an indoor and an outdoor or an in-car and an out-car, there is also an effect that an incursion of an unnecessary light into an indoor or an in-car is avoided and a deterioration due to a light or heat of the light control device per se is avoided, by providing a function such as an ultraviolet light protection or an infrared light protection to the base material arranged outside.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.
It should be further understood by those skilled in the art that although the foregoing description has been made on embodiments of the invention, the invention is not limited thereto and various changes and modifications may be made without departing from the spirit of the invention and the scope of the appended claims.

**[Reference Signs List]**

| | |
|---|---|
| 11 | first substrate |
| 12 | second substrate |
| 13 | first electrode |
| 13a | first electrode wiring connecting portion |
| 14 | second electrode |
| 14a | second electrode wiring connecting portion |
| 14b | second electrode assembly portion |
| 15 | dispersion medium |
| 16 | light controlling particle |
| 17 | suspension |
| 18 | resin matrix |
| 19 | partition wall |
| 100 | driving circuit |
| 101 | internal power supply |
| 200 | display area |
| 300 | external power supply |

## Claims

1. A light control device comprising:
a first substrate (11) and a second substrate (12),
a first electrode (13) formed on said first substrate (11),
a second electrode (14) formed on said second substrate (12),
a suspension (17), and
a driving circuit (100),
wherein said first substrate (11), said first electrode (12), said suspension (17), said second electrode (14), and said second substrate (12) are arranged in order from a side of said first substrate (11),
said driving circuit (100) supplies an electric potential difference between said first electrode (13) and said second electrode (14),
said suspension (17) comprises a light controlling particle (16) and a dispersion medium (15),
said light controlling particle (16) has an optical anisotropy and is electrostatically charged,
said second electrode (14) is constituted so as to periodically align plural electrodes, and
each electrode constituting said second electrode (14) has a same electric potential.

2. The light control device according to claim 1,
wherein said light controlling particle (16) is rod-like,
said light controlling particle (16) has an aspect ratio of from 5 to 30, and
said light controlling particle (16) comprises any one kind of polyperiodide, a polymer, a carbon-based material, a metallic material or inorganic compound.

3. The light control device according to claim 1 or 2,
wherein each electrode constituting said second electrode (14) has a same width of a minor axis direction.

4. The light control device according to claim 1, 2 or 3,
wherein said first electrode (13) is a solid electrode.

5. The light control device according to claim 1, 2, 3 or 4,
wherein said first electrode (13) is constituted so as to periodically align plural electrodes, and
each electrode constituting said first electrode (13) has a same electric potential.

6. The light control device according to claim 5,
wherein a period of the plural electrodes aligned in said first electrode (13) is equal to a period of the plural electrodes aligned in said second electrode (14),
a major axis direction of the electrode constituting said first electrode (13) is orthogonal to a major axis direction of the electrode constituting said second electrode (14).

7. The light control device according to at least one of the preceding claims,
wherein said driving circuit supplies an alternating voltage and a direct-current voltage.

8. The light control device according to at least one of the preceding claims,
wherein said light controlling particle (16) is negatively electrostatically charged,
said light controlling particle (16) is unevenly distributed on said second electrode (14) by enlarging an electric potential of said second electrode (14) above an electric potential of said first electrode (13), and
said light controlling particle (16) unevenly distributed on said second electrode (14) is dispersed in said suspension by enlarging an electric potential of said first electrode (13) above an electric potential of said second electrode (14).

9. The light control device according to at least one of the preceding claims,
wherein a resin matrix (18) is arranged between said first substrate (11) and said second substrate (12), and
said suspension (17) is arranged in the form of liquid drop in said resin matrix (18).

10. The light control device according to at least one of the preceding claims,
wherein a partition wall (19) is arranged between said first substrate (11) and said second substrate (12), and
said suspension (17) is arranged so as to be subdivided by said partition wall (19).

11. The light control device according to at least one of the preceding claims,
wherein said driving circuit (100) has an internal power supply (101), and
said internal power supply (101) has an electric power which allow said light controlling particle (16) to be unevenly distributed on said second electrode (14) at least once.

12. The light control device according to at least one of the preceding claims,
wherein said light control device has an electrode connecting portion (14a) which connects each electrode constituting said second electrode (12).
